# EUROPÄISCHE PATENTSCHRIFT

(11) **EP 3 339 082 B1**
(45) Veröffentlichungstag und Bekanntmachung des Hinweises auf die Patenterteilung: **24.03.2021**
(21) Anmeldenummer: 17002053.1
(22) Anmeldetag: 21.12.2017
(51) Int. Cl.: B60L 5/08

(54) **SYSTEM UND VERFAHREN ZUR BESTIMMUNG DES VERSCHLEISSZUSTANDES VON ELEKTRISCHEN FAHRLEITUNGEN**
SYSTEM AND METHOD FOR DETERMINING THE WEAR OF ELECTRICAL CONTACT LINES
SYSTÈME ET MÉTHODE DE DÉTERMINATION D'ÉTAT D'USURE DES CATÉNAIRES ÉLECTRIQUES

(30) Priorität: 23.12.2016 DE 102016015670
(43) Veröffentlichungstag der Anmeldung: 27.06.2018
(73) Patentinhaber: LibroDuct GmbH & Co. KG, 66125 Saarbrücken (DE)
(72) Erfinder: Schaaf-Christmann, Bernhard, 66126 Saarbrücken (DE); Wagner, Jochen, 66127 Saarbrücken (DE); Messerschmidt, Jan, 66119 Saarbrücken (DE)

(56) Entgegenhaltungen:
- WO-A2-2009/153526
- WO-A2-2015/067235
- DE-A1-102006 031 919
- DE-U1- 29 803 906

## Beschreibung

### Gebiet der Erfindung

Die Erfindung betrifft eine Anordnung und ein Verfahren zur Ermittlung der Dicke eines Oberleitungsdrahts für elektrische Fahrzeuge, die ihre Energie zumindest teilweise über Oberleitungsdraht beziehen. Insbesonders handelt es sich um ein Messsystem zur kontinuierlichen Bestimmung im Leitungsverlauf der vertikalen (längs der Andrahtrichtung) und insbesondere horizontalen (quer zur Andrahtrichtung) Stärke von Oberleitungsfahrdrähten für die elektrische Energieversorgung von Schienen- und anderen Fahrzeugen.

### Hintergrund der Erfindung

Elektrische Fahrzeuge sind im Vergleich zu mit fossilen Brennstoffen betriebenen besonders umweltfreundlich, da lokal emissionsfrei, lärmreduziert und grundsätzlich energieeffizienter. Die Energieeffizienz ist in der Regel besonders bei solchen Elektrofahrzeugen gegeben, die ihre Energie, statt ausschließlich aus einem mitgeführten Speicher, aus einer den Fahrweg zumindest stückweise begleitenden Fahrleitung mittels eines Stromabnehmers beziehen.

Als Stromabnehmer sind heute zumeist Schleifleisten (im Bahn- oder Straßenbahnbereich, nach aktuellen Entwicklungen aber auch bei Lastkraftwagen) oder Schleifschuhe (insbesondere bei Oberleitungsbussen, vereinzelt auch noch bei Straßenbahnen) im Einsatz, die im Kontaktbereich zumeist aus einem Kohlewerkstoff und damit aus einem Material bestehen, das im Vergleich zur Fahrleitung zwar weicher ist, aber doch so hart, dass ein Verschleiß der Fahrleitung nicht gänzlich verhindert werden kann. Durch Sondereinflüsse wie Eis, Flugsand oder durch mechanische Effekte kann dort zudem ein noch wesentlich stärkerer Verschleiß auftreten, der durchaus zu einer derartigen Materialschwächung führen kann, dass die Funktion der Fahrleitung nicht mehr gewährleistet ist oder sie sogar reißt, was dann mit großen Sicherheitsgefahren verbunden ist.

Insbesondere bei Stangenstromabnehmern besteht die Gefahr, dass das aus Metall bestehende Führungsprofil der Schleifkohle, z. B. aufgrund von Zentrifugalkräften bei Kurvenfahrt mit zu hoher Geschwindigkeit, in (seitlichen) Kontakt mit der Fahrleitung kommt, was dann durch die Metall-auf-Metall-Reibung zu extrem beschleunigtem Verschleiß in Form von seitlichem Abrieb der Fahrleitung, d. h. zu einer Schwächung der horizontalen Dicke (quer zur Andrahtrichtung) führt.

Um die Betriebssicherheit des Systems zu gewährleisten, ist daher eine regelmäßige Überprüfung der Fahrleitung notwendig. Heute im Einsatz befindliche Systeme erfordern, soweit sie überhaupt automatisiert sind, eine separate Fahrt mit einem Messfahrzeug. DE000019637898 oder DE000019835282 beschreiben z. B. eine entsprechende Anordnung.

Die in den genannten Anmeldungen beschriebenen Einrichtungen haben jedoch den Nachteil, dass sie zumindest für Obus-Oberleitungen zu sperrig sind, da diese, z. B. im Bereich von Weichen, abschnittsweise in Kanälen geführt sein können, die zwar ausreichend Platz für die normalen Schleifschuhe bieten, nicht jedoch für die deutlich voluminöseren Testschuhe.

Es gibt zwar noch einen anderen Ansatz am Markt, der dieses Problem vermeidet, dieser arbeitet aber kamera-optisch und damit mit wesentlich aufwendigerer und kostenintensiverer Technik. Aus diesem Grund und wegen des sonstigen Volumens dieses Systems, das zu Kollisionen führen könnte, wenn beide Oberleitungen gleichzeitig untersucht würden, wird mit diesem System zu einer Zeit auch immer nur einer der beiden Oberleitungsdrähte vermessen. Dies verdoppelt natürlich die Zeit für die Messfahrten.

Die Gebrauchsmusterschrift DE 298 03 906 U1 offenbart eine Vorrichtung zur Bestimmung des Verschleißzustands von Oberleitungsfahrdrähten im schienengebundenen Transportwesen. Die Vorrichtung weist einen entlang der Oberleitungsfahrdrähte bewegbaren Sensorkopf auf, wobei der Sensorkopf ein Sensorelement mit einer Erreger- und einer Empfängerwicklung aufweist, das entlang eines zu untersuchenden Oberleitungsfahrdrahts geführt und mit diesem in Kontakt gebracht wird, so dass bei Beaufschlagung der Erregerwicklung des Sensorelements mit einer hochfrequenten Wechselspannung im Oberleitungsfahrdraht Wirbelströme erzeugt werden, die ein Magnetfeld generieren, das in der Empfängerwicklung des Sensorelements eine elektrische Spannung induziert, die ein Maß für die Kontaktfläche zwischen dem Sensorelement und dem Oberleitungsfahrdraht darstellt und zur Bestimmung des Verschleißzustands des Oberleitungsfahrdrahts verwendet wird.

Die Patentanmeldung WO 2009/1 53526 A2 offenbart ein Verfahren zum Erzeugen eines alternierenden elektromagnetischen Feldes durch einen Wechselstrom, der an eine rechteckige Sendespule angelegt wird, die in der Nähe eines Fahrdrahts angeordnet ist und sich entlang des Drahts bewegt. Das Magnetfeld, das durch den Draht gestört wird, wird durch Detektorspulen detektiert, die in der Nähe des Drahts angeordnet sind. Die Störung des Feldes durch den Draht entlang des Drahts wird basierend auf den emittierten und gestörten Feldern bestimmt. Der Verschleiß des Drahts entlang der Bahn wird basierend auf der Feldstörung und einem Rechenmodell bestimmt, wobei die Störung mit der Abnutzung des Drahts korreliert.

### Zusamenfassung der Erfindung

Es ist Aufgabe der Erfindung, eine Anordnung und ein Verfahren anzugeben, die es mit geringem Aufwand an Betriebsmitteln ermöglichen, die Dicke von Oberleitungsfahrdrähten oder vergleichbaren Fahrleitungen zur Stromversorgung von Fahrzeugen in mindestens einer Messebene zu ermitteln.

Gemäß der Erfindung wird die gestellte Aufgabe durch die Anordnung und das Verfahren der unabhängigen Patentansprüche gelöst. Vorteilhafte Weiterbildungen sind in abhängigen Patentansprüchen angegeben.

Die grundlegende Idee der Erfindung besteht darin, aus der Verstimmung der Resonanzfrequenz eines elektrischen Schwingkreises die Dicke eines Oberleitungsdrahtes zu ermitteln.

Die Erfindung beansprucht eine Anordnung zur Ermittlung der Dicke eines Oberleitungsdrahts, eine Stromabnehmerstange und einen an der Stromabnehmerstange angeordneten Stromabnehmerkopf, wobei vorgesehen sind:
- eine Messvorrichtung mit mindestens einer elektrischen Schwingkreisschaltung, die mit dem Oberleitungsdraht im angedrahteten Zustand des Stromabnehmerkopfs in elektrischer, insbesondere elektro-induktiver Wirkverbindung steht,
- wobei die Resonanzfrequenz der Schwingkreisschaltung ein Maß für die Dicke des Oberleitungsdrahts ist und
- wobei die Messvorrichtung ausgebildet und eingerichtet ist, die Resonanzfrequenz der Schwingkreisschaltung und aus der Resonanzfrequenz die Dicke des Oberleitungsdrahts zu ermitteln.

Die Erfindung bietet den Vorteil, dass die Dicke eines Oberleitungsdrahtes quer zu und in Andrahtrichtung einfach und zuverlässig bestimmt werden kann.

Erfindungsgemäß umfasst die Anordnung des Weiteren:
- einen Schleifschuh des Stromabnehmerkopfs und
- mindestens eine im oder auf dem Schleifschuh angeordnete Spule der Schwingkreisschaltung, wobei die Induktivität der Spule durch den im Schleifschuh geführten Oberleitungsdraht veränderbar ist.

In einer weiteren Ausführungsform kann die mindestens eine Spule derart im Schleifschuh angeordnet sein, dass sie in Andrahtrichtung gesehen sich links und/oder rechts des Oberleitungsdrahts im angedrahteten Zustand befindet, wobei die Dicke des Oberleitungsdrahts quer zur Andrahtrichtung ermittelbar ist.

In einer weiteren Ausprägung kann die mindestens eine Spule längsförmig oder oval in Richtung des Oberleitungsdrahts ausgebildet sein. Dadurch kann die Empfindlichkeit der Messung verbessert werden.

In einer weiteren Ausgestaltung kann die mindestens eine Spule schräg in Bezug auf die Andrahtrichtung angeordnet sein. Dadurch wird eine Kollision mit den Halterungen des Oberleitungsdrahts vermieden.

In einer weiteren Ausgestaltung kann die mindestens eine Spule derart im Schleifschuh angeordnet sein, dass sie unterhalb des Oberleitungsdrahts im angedrahteten Zustand zu liegen kommt, wobei der Abstand zwischen Schleifkohle und Oberleitungsdraht ermittelbar ist.

In einer Weiterbildung weist die Anordnung auf:
- Mehrere Schwingkreisschaltungen mit jeweils mindestens einer Spule, wobei die Spulen in Andrahtrichtung übereinander und in Richtung des Oberleitungsdrahts nebeneinander angeordnet sind,
- wobei die Messvorrichtung ausgebildet und eingerichtet ist, aus dem Unterschied der ermittelten Resonanzfrequenzen die Dicke des Oberleitungsdrahts in Andrahtrichtung zu ermitteln.

In einer Weiterbildung weist die Anordnung auf:
- Lichtquellenzellen und Lichtsensorzellen der Messvorrichtung, die mit dem Oberleitungsdraht im angedrahteten Zustand des Stromabnehmerkopfs in optischer Wirkverbindung stehen, und
- wobei die Messvorrichtung ausgebildet und eingerichtet ist, aus den Ausgangssignalen der Lichtsensorzellen die Dicke des Oberleitungsdrahts in Andrahtrichtung zu ermitteln.

In einer weiteren Ausführungsform können die Lichtquellenzellen und die Lichtsensorzellen in oder auf dem Stromabnehmerkopf angeordnet sein.

In einer Weiterbildung können die Lichtquellenzellen und die Lichtsensorzellen in Andrahtrichtung übereinander und in Richtung des Oberleitungsdrahtes versetzt angeordnet sein.

In einer Weiterbildung weist die Anordnung auf:
- Ein Positionserfassungssystem, das ausgebildet und eingerichtet ist, die Position des Stromabnehmerkopfs zu ermitteln,
- wobei die Messvorrichtung ausgebildet und eingerichtet ist, die ermittelten Dicken des Oberleitungsdrahts mit den zugehörigen Positionen des Stromabnehmerkopfs zu speichern.

Die Erfindung beansprucht auch ein Verfahren zur Ermittlung der Dicke eines Oberleitungsdrahtes, wobei
- automatisch mindestens eine durch den Oberleitungsdraht verstimmte Resonanzfrequenz mindestens einer Schwingkreisschaltung ermittelt wird und
- die Dicke des Oberleitungsdrahts aus der mindestens einen ermittelten Resonanzfrequenz ermittelt wird.

In einer Weiterbildung des Verfahrens kann die Ermittlung der Dicke durch die Fahrt eines oberleitungsdrahtgebundenen, die Schwingkreisschaltung aufweisenden Fahrzeugs erfolgen.

In einer Weiterbildung kann automatisch die Dicke des Oberleitungsdrahts in Andrahtrichtung optisch ermittelt werden.

Weitere Besonderheiten und Vorteile der Erfindung werden aus den nachfolgenden Erläuterungen mehrerer Ausführungsbeispiele anhand von schematischen Zeichnungen ersichtlich.

Es zeigen:
- Fig. 1:: eine Seitenansicht eines Oberleitungsfahrzeuges mit Stromabnehmerstangen,
- Fig. 2:: eine Seitenansicht eines Stromabnehmerkopfs an einer Stromabnehmerstange,
- Fig. 3:: eine Vorderansicht eines Stromabnehmerkopfs,
- Fig. 4:: eine Seitenansicht eines Stromabnehmerkopfs mit einer längsförmigen Spule,
- Fig. 5;: eine Seitenansicht eines Stromabnehmerkopfs mit mehreren schräg angeordneten Spulen,
- Fig. 6:: eine Seitenansicht eines Stromabnehmerkopfs mit Spule und optischen Messmitteln und
- Fig. 7:: ein Blockschaltbild einer Anordnung.

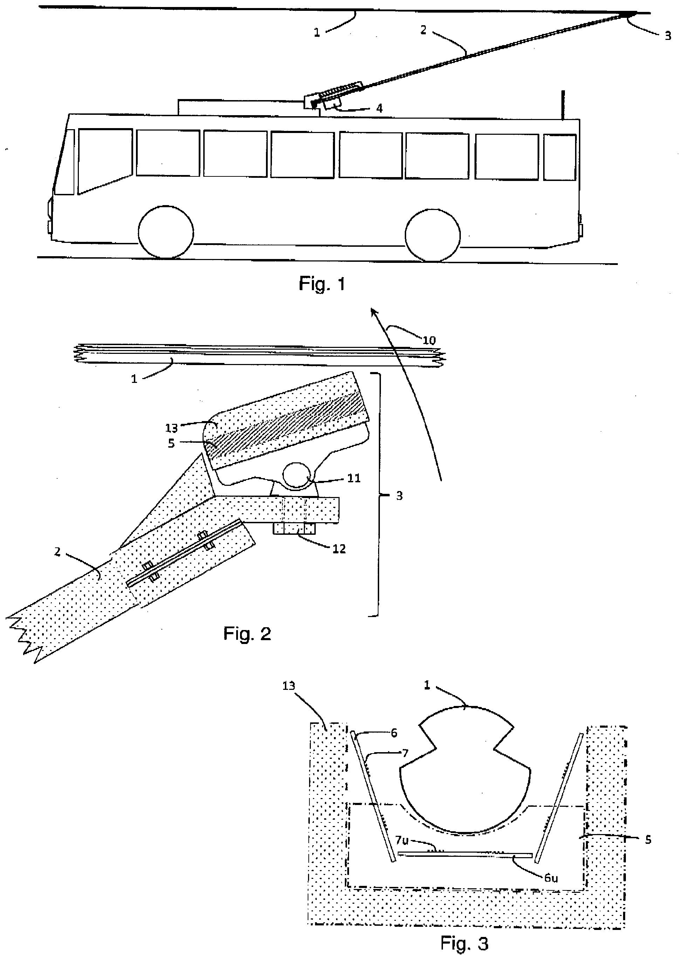

**Fig. 1** zeigt eine Seitenansicht eines Oberleitungsfahrzeuges mit Stromabnehmerstangen 2, an deren Basis eine Vorrichtung zur Aufnahme einer elektronischen Schaltung 4 und an deren Ende ein Stromabnehmerkopf 3 angeordnet sind.

**Fig. 2** zeigt eine Seitenansicht eines Stromabnehmerkopfes 3, der am Ende einer Stromabnehmerstange 2 angeordnet ist, gemäß Stand der Technik. Der Stromabnehmerkopf 3 ist ausgebildet zum Andrahten in Andrahtrichtung 10 an einen Oberleitungsdraht 1, auch mit Fahrdraht bezeichenbar. Dazu weist der Stromabnehmerkopf 3 einen Schleifschuh 13 auf, der mittels eines Rotationsgelenks 12 und eines Kippgelenks 11 mit der Stromabnehmerstange 2 beweglich verbunden ist. Der Schleifschuh 13 enthält ein U-förmiges Profil, in dem eine Schleifkohle 5 zum Abgriff elektrischer Energie vom Oberleitungsdraht 1 angeordnet ist.

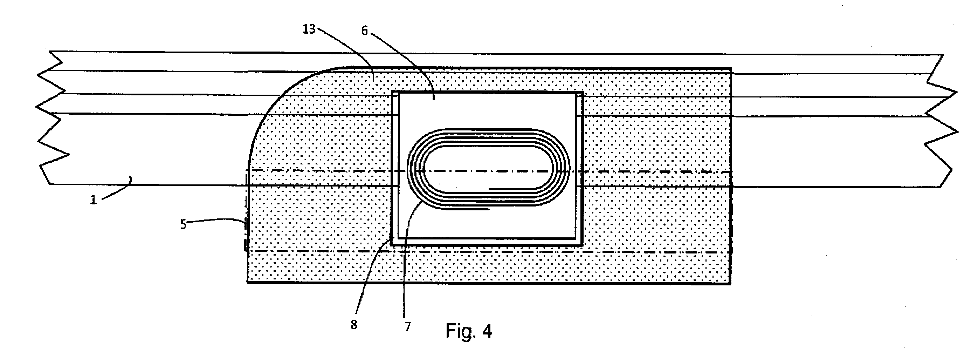

**Fig. 3** und **Fig. 4** zeigen den Schleifschuh 13 gemäß **Fig. 2****,** erweitert um die erfindungsmäßig angeordneten Spulen 7. Die Spulen 7 sind beidseitig der Fahrleitungsrille innerhalb der Schleifkohle 5 angeordnet, deren Mitte im Bereich der Spulen 7 durch (nicht leitenden) Kunststoff oder Keramik o. ä. ersetzt ist, da die leitende Schleifkohle 5 im Messbereich der Spule 7, der durch ihre Achse und Form definiert ist, die Messergebnisse verfälschen würde.

Die Messung wird mit einer Messvorrichtung im angedrahteten Zustand durchgeführt. Dazu wird die Stromabnehmerstange 2 zusammen mit dem Stromabnehmerkopf 3 in Andrahtrichtung 10 derart an den Oberleitungsdraht 1 herangeführt, dass der die Schleifkohle 5 und das U-Profil aufweisende Schleifschuh 13 sich vermittels des Kipp- und Rotationsgelenks 11, 12 parallel zum Oberleitungsdraht 1 ausrichtet und über die ausgerundete Rille in der Schleifkohle 5 einen flächigen Kontakt zum Oberleitungsdraht 1 bildet.

Vorteilhafterweise sind die Spulen 7 als Flachspulen auf Platinen als Spulenträger 6 spiralförmig aufgedruckt und zur weiteren Erhöhung des Signalverhaltens oval oder länglich ausgeführt. Auch ist es vorteilhaft, die Platinen im Schleifschuh 13 nach oben sich öffnend anzubringen, um die Gefahr der Kollision mit dem Oberleitungsdraht 1 zu verringern. Eine zusätzliche Spule 7u auf einem zusätzlichen Spulenträger 6u kann in der Basis des Schleifschuhs 13 angebracht werden, mit der der Abstand des Schleifschuhs 13 vom Oberleitungsdraht 1 gemessen werden kann. Damit können sowohl der Abnutzungsgrad der Schleifkohle 5 als auch kurzzeitige Kontaktverluste (Sprünge) des Oberleitungsdrahts 1 von der Schleifkohle 5 bestimmt bzw. festgestellt werden.

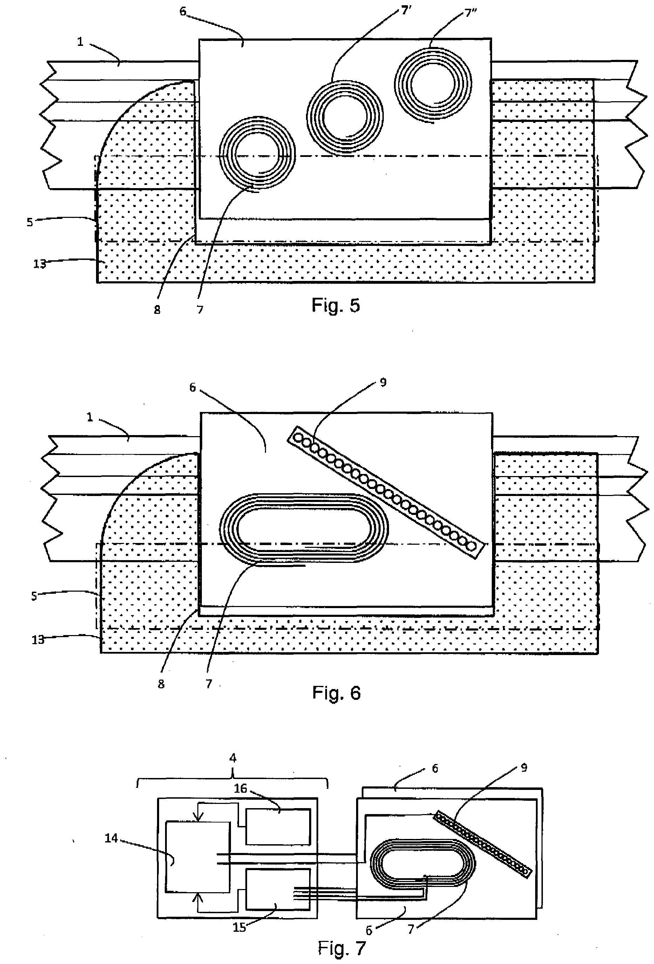

Weiters sind die Spulen 7 wie in **Fig. 7** dargestellt mit der Schwingkreisschaltung 15 als Teil der elektronischen Schaltung 4 verbunden. Die Schwingkreisschaltung ist gemäß **Fig. 7** derart ausgelegt, dass die Spulen 7 mit der Schwingkreisschaltung 15 zusammen einen elektrischen Schwingkreis mit einer definierten Resonanzfrequenz bilden. Die Resonanzfrequenz ändert sich aufgrund elektromagnetischer Gesetze, wenn Metall bzw. leitendes Material so weit in die Nähe der Spulen 7 gebracht wird, dass ein elektrischer (Wirbel-) Strom in dem Material induziert wird, der den Schwingkreis bedämpft, das heißt, die Schwingkreisschaltung 15 wird verstimmt.

Weiterhin ist in der Messvorrichtung 14 ausgebildet und eingerichtet, die sich einstellende Resonanzfrequenz der Schwingkreisschaltung 15 zu messen. Da sich die Rückwirkung der Wirbelströme auf die Schwingkreisschaltung 15 und deren Resonanzfrequenz mit dem Abstand des Metalls von der Spule 7 ändert, kann aus der gemessenen Resonanzfrequenz direkt (z. B. per abgespeicherter Umsetzungstabelle und Interpolation) auf den Abstand des aus Metall bestehenden Oberleitungsdrahtes 1 von der Spule 7 geschlossen werden, wenn dieser sich im Schleifschuh 13 befindet, d. h. im angedrahteten Zustand.

Aus den so gemessenen Abständen der Spulen 7 kann damit durch eine einfache lineare Funktion die Dicke des Oberleitungsdrahtes 1 mit für den Zweck ausreichender Genauigkeit bestimmt werden.

**Fig. 5** zeigt eine optionale Ausführungsform, bei der es durch beidseitig parallel und vertikal in Andrahtrichtung 10 gestaffelt im Schleifschuh 13 angebrachte Spulen 7 weiterhin möglich ist, nicht nur die horizontale, sondern auch die vertikale Dicke des Oberleitungsdrahts zu bestimmen. Dies erfolgt, indem die Messvorrichtung die Messergebnisse für die einzelnen Spulenpaare (Spulen 7, 7' und 7" links und rechts, jeweils in gleicher Höhe) miteinander vergleicht. Bei geeigneter geometrischer und elektrischer Auslegung werden bei einem in Andrahtrichtung 10 nicht abgenutzten Oberleitungsdraht 1 alle Spulenpaare die weitgehend gleichen Messergebnisse für die Dicke (quer zur Andrahtrichtung 10) liefern, wohingegen bei abgenutzten Oberleitungsdrähten 1 die weiter entfernt in Andrahtrichtung 10 angebrachten Spulenpaare geringere Dickenwerte liefern, da sich in diesem Fall weniger bzw. gar kein Metall mehr im Erfassungsbereich der Spulen 7 befindet (aufgrund der Mechanik der Stangenstromabnehmer liegt die Schleifkohle 5 immer am Oberleitungsdraht 1 an).

Alternativ kann die oben beschriebene zusätzliche vertikale Dickenmesseinrichtung mit einem einzigen Spulenpaar, dafür in Kombination mit einer optischen Messung dargestellt werden. Hierzu können handelsübliche, z. B. insbesondere aus Laser- und Fotodioden aufgebaute Lichtquellen- und Lichtsensorzeilen 9 benutzt werden, auch Lichtvorhänge genannt, die gemäß **Fig. 6** im Schleifschuh 13, zusätzlich zu dem Spulenpaar zur Messung der Dicke quer zur Andrahtrichtung 10, montiert werden. Wenn dabei die Lichtquellen- und Lichtsensorzeilen wie in **Fig. 6** gezeigt, statt senkrecht schräg montiert werden, kann eine höhere Auflösung bei den Messwerten erreicht werden.

Um Messergebnisse nicht nur für einen Punkt, sondern für einen ganzen Oberleitungsabschnitt zu erhalten, kann eine Messfahrt des die Vorrichtung tragenden Fahrzeuges durchgeführt werden, bei der in regelmäßigen zeitlichen oder räumlichen Abständen Messwerte erhoben und zusammen mit der über ein Positioniersystem (Satellitennavigation), den Kilometerzähler oder Inertialsensoren ermittelten Position des Fahrzeuges und damit des Messkopfes mit der Messeinrichtung auf der Messstrecke aufgezeichnet werden. Umgekehrt können auch Messwerte zusammen mit der Ortsinformation beim Über- oder Unterschreiten von Triggerwerten abgespeichert werden.

Vorteilhafterweise wird dabei nicht nur der jeweils aktuelle Messwert für das Messintervall gespeichert, sondern auch die durch annäherungsweise kontinuierliche Messungen gewonnenen Durchschnitts-, Maximum- und insbesondere Minimumwerte für das zurückliegende Messintervall bzw. eine Teilmenge dieser Werte.

## Patentansprüche

1. Anordnung zur Ermittlung der Dicke eines Oberleitungsdrahts (1), aufweisend:
- eine Stromabnehmerstange (2) und
- einen an der Stromabnehmerstange (2) angeordneten Stromabnehmerkopf (3),
**gekennzeichnet durch:**
- eine Messvorrichtung (14) mit mindestens einer elektrischen Schwingkreisschaltung (15), die mit dem Oberleitungsdraht (1) im angedrahteten Zustand des Stromabnehmerkopfs (3) in elektro-induktiver Wirkverbindung steht,
- wobei die Resonanzfrequenz der Schwingkreisschaltung (15) ein Maß für die Dicke des Oberleitungsdrahts (1) ist und
- wobei die Messvorrichtung (14) ausgebildet und eingerichtet ist, die Resonanzfrequenz der Schwingkreisschaltung (15) und aus der Resonanzfrequenz die Dicke des Oberleitungsdrahts (1) zu ermitteln,
- einen Schleifschuh (13) des Stromabnehmerkopfs (3) und
- mindestens eine im oder auf dem Schleifschuh (13) angeordnete Spule (7) der Schwingkreisschaltung (15), wobei die Induktivität der Spule (7) durch den im Schleifschuh (13) geführten Oberleitungsdraht (1) veränderbar ist.

2. Anordnung nach Anspruch 1,
**dadurch gekennzeichnet,**
**dass** die mindestens eine Spule (7) derart im Schleifschuh (13) angeordnet ist, dass sie in Andrahtrichtung (10) gesehen sich im angedrahteten Zustand links und/oder rechts des Oberleitungsdrahts (1) befindet, wobei die Dicke des Oberleitungsdrahts (1) quer zur Andrahtrichtung (10) ermittelbar ist.

3. Anordnung nach Anspruch 1 oder 2,
**dadurch gekennzeichnet,**
**dass** die mindestens eine Spule (7) längsförmig oder oval in Richtung des Oberleitungsdrahts (1) ausgebildet ist.

4. Anordnung nach einem der Ansprüche 1 bis 3,
**dadurch gekennzeichnet,**
**dass** die mindestens eine Spule (7) schräg in Bezug auf die Andrahtrichtung (10) angeordnet ist.

5. Anordnung nach Anspruch 1,
**dadurch gekennzeichnet,**
**dass** die mindestens eine Spule (7u) derart im Schleifschuh (13) angeordnet ist, dass sie bezogen auf nach oben gerichtete Andrahtrichtung (10) unterhalb des Oberleitungsdrahts (1) im angedrahteten Zustand zu liegen kommt, wobei der Abstand des Schleifschuhs (13) vom Oberleitungsdraht (1) ermittelbar ist.

6. Anordnung nach einem der Ansprüche 1 bis 4,
**gekennzeichnet durch:**
- mehrere Schwingkreisschaltungen (15) mit jeweils mindestens einer Spule (7), wobei die Spulen (7) in Andrahtrichtung (10) übereinander und in Richtung des Oberleitungsdrahts (1) nebeneinander angeordnet sind,
- wobei die Messvorrichtung (14) ausgebildet und eingerichtet ist, aus dem Unterschied der ermittelten Resonanzfrequenzen die Dicke des Oberleitungsdrahts (1) in Andrahtrichtung (10) zu ermitteln.

7. Anordnung nach einem der Ansprüche 1 bis 4,
**gekennzeichnet durch:**
- Lichtquellenzellen und Lichtsensorzellen (9) der Messvorrichtung (14), die mit dem Oberleitungsdraht (1) im angedrahteten Zustand des Stromabnehmerkopfs (3) in optischer Wirkverbindung stehen, und
- wobei die Messvorrichtung (14) ausgebildet und eingerichtet ist, aus den Ausgangssignalen der Lichtsensorzellen (9) die Dicke des Oberleitungsdrahts (1) in Andrahtrichtung (10) zu ermitteln.

8. Anordnung nach Anspruch 7,
**dadurch gekennzeichnet,**
**dass** die Lichtquellenzellen und die Lichtsensorzellen (9) in oder auf dem Stromabnehmerkopf (3) angeordnet sind.

9. Anordnung nach Anspruch 8,
**dadurch gekennzeichnet,**
**dass** die Lichtquellenzellen und die Lichtsensorzellen (9) in Andrahtrichtung (10) übereinander und in Richtung des Oberleitungsdrahts (1) versetzt angeordnet sind.

10. Anordnung nach einem der vorhergehenden Ansprüche, **gekennzeichnet durch:**
- ein Positionserfassungssystem (16), das ausgebildet und eingerichtet ist, die Position des Stromabnehmerkopfs (3) zu ermitteln,
- wobei die Messvorrichtung (14) ausgebildet und eingerichtet ist, die ermittelten Dicken des Oberleitungsdrahts (1) mit den zugehörigen Positionen des Stromabnehmerkopfs (3) und damit der Messposition zu speichern.

11. Verfahren zur Ermittlung der Dicke eines Oberleitungsdrahts (1) mit einer Anordnung nach einem der Ansprüche 1 bis 10, **gekennzeichnet durch:**
- automatische Ermittlung der durch den Oberleitungsdraht (1) verstimmten Resonanzfrequenz der Schwingkreisschaltung (15) und
- Ermittlung der Dicke des Oberleitungsdrahts (1) aus der ermittelten Resonanzfrequenz.

12. Verfahren nach Anspruch 11,
**dadurch gekennzeichnet,**
**dass** die Ermittlung der Dicke durch die Fahrt eines oberleitungsdrahtgebundenen, die Schwingkreisschaltung (15) aufweisenden Fahrzeugs erfolgt.

13. Verfahren nach Anspruch 11 oder 12,
**gekennzeichnet durch:**
- automatisches optisches Ermitteln der Dicke des Oberleitungsdrahts (1) in Andrahtrichtung (10), wobei die Anordnung zumindest nach einem der Ansprüche 7-9 ausgebildet ist.

## Claims

1. Arrangement for determining the thickness of an overhead wire (1), comprising:
- a current collector trolley pole (2), and
- a current collector head (3) arranged on the current collector trolley pole (2),
**characterised by:**
- a measuring device (14) having at least one electrical oscillator circuit (15) which is in electrical inductive operative contact with the overhead wire (1) in the wire-contacted state of the current collector head (3),
- wherein the resonant frequency of the oscillator circuit (15) is a measure of the thickness of the overhead wire (1), and
- wherein the measuring device (14) is designed and equipped to determine the resonant frequency of the oscillator circuit (15) and, from the resonant frequency, the thickness of the overhead wire (1),
- a contact shoe (13) of the current collector head (3), and
- at least one coil (7) of the oscillator circuit (15) arranged in or on the contact shoe (13), wherein the inductance of the coil (7) is changeable by the overhead wire (1) guided in the contact shoe (13).

2. Arrangement according to Claim 1,
**characterised in that**
at least one coil (7) is arranged in the contact shoe (13) so that, with respect to the direction of wire-contacting (10), it is left and / or right of the overhead wire (1) in its wire-contacted state, with the thickness of the overhead wire (1) being capable of being determined transversely to the direction of wire-contacting (10).

3. Arrangement according to Claim 1 or 2,
**characterised in that**
at least one coil (7) is elongated or ovally formed with respect to the direction of the overhead wire (1).

4. Arrangement according to one of Claims 1 to 3,
**characterised in that**
at least one coil (7) is arranged at an oblique angle with respect to the direction of wire-contacting (10).

5. Arrangement according to Claim 1,
**characterised in that**
at least one coil (7u) is arranged in the contact shoe (13) so as to come to be positioned below the overhead wire (1) in the upwardly directed direction of wire-contacting when the coil is in its wire-contacted state (10), the distance of the contact shoe (13) from the overhead wire (1) being capable of being determined.

6. Arrangement according to one of Claims 1 to 4,
**characterised by:**
- multiple oscillator circuits (15), each having at least one coil (7), wherein the coils (7) are arranged above one another with respect to the direction of wire-contacting (10) and adjacent to one another with respect to the direction of the overhead wire (1),
- wherein the measuring device (14) is designed and equipped to determine, from the difference between the resonant frequencies determined, the thickness of the overhead wire (1) with respect to the direction of wire-contacting (10).

7. Arrangement according to one of Claims 1 to 4,
**characterised by:**
- light source cells and light sensor cells (9) of the measuring device (14), which are in an optical operative connection with the overhead wire (1) in the wire-contacted state of the current collector head (3), and
- wherein the measuring device (14) is designed and equipped to determine, from the output signals of the light sensor cells (9), the thickness of the overhead wire (1) with respect to the direction of wire-contacting (10).

8. Arrangement according to Claim 7,
**characterised in that**
the light source cells and the light sensor cells (9) are arranged in or on the current collector head (3).

9. Arrangement according to Claim 8,
**characterised in that**
the light source cells and the light sensor cells (9) are arranged above one another with respect to the direction of wire-contacting (10) and in an offset manner with respect to the direction of the overhead wire (1).

10. Arrangement according to one of the foregoing claims,
**characterised by:**
- a position detection system (16), which is designed and equipped to determine the position of the current collector head (3),
- wherein the measuring device (14) is designed and equipped to store the thicknesses determined of the overhead wire (1) along with the associated positions of the current collector head (3) and, thus, the measured position.

11. Method to determine the thickness of an overhead wire (1) using an arrangement according to one of Claims 1 to 10,
**characterised by:**
- automatic determination of the detuned resonant frequency of the oscillator circuit (15) caused by the overhead wire (1), and
- determination of the thickness of the overhead wire (1) from the resonant frequency determined.

12. Method according to Claim 11,
**characterised in that**
the thickness is determined by the travel of an overhead wire-connected vehicle containing the oscillator circuit (15).

13. Method according to Claim 11 or 12,
**characterised by:**
- automatic optical determination of the thickness of the overhead wire (1) with respect to the direction of wire-contacting (10), the arrangement being designed according to at least one of Claims 7 to 9.

## Revendications

1. Dispositif pour déterminer l'épaisseur du fil d'une ligne aérienne de contact (1), comprenant :
- une perche de captage du courant (2) et
- une tête de captage du courant (3) disposée sur la perche de captage du courant (2),
**qui se caractérise par** :
- un dispositif de mesure (14) avec au moins un circuit résonnant électrique (15) qui est en liaison active par induction électrique avec la ligne aérienne de contact (1) lorsque la tête de captage du courant (3) est en état connecté,
- la fréquence de résonance du circuit résonnant (15) étant une mesure de l'épaisseur du fil de la ligne aérienne de contact (1) et
- le dispositif de mesure (14) étant conçu et agencé pour déterminer la fréquence de résonance du circuit résonnant (15) et, sur la base de la fréquence de résonance, l'épaisseur du fil de la ligne aérienne de contact (1),
- un sabot de contact (13) de la tête de captage du courant (3) et
- au moins une bobine (7) du circuit résonnant (15) disposée dans ou sur le sabot de contact (13), l'inductance de la bobine (7) pouvant être modifiée par la ligne aérienne de contact (1) qui passe par le sabot de contact (13).

2. Agencement selon la revendication 1,
**qui se caractérise en ce que**
au moins une bobine (7) est disposée dans le sabot de contact (13) de telle manière que, vue dans la direction de la connexion (10), elle se trouve à gauche et/ou à droite de la ligne aérienne de contact (1) lorsqu'elle est en état connecté, l'épaisseur du fil de la ligne aérienne de contact (1) pouvant être déterminée transversalement par rapport à la direction de la connexion (10).

3. Agencement selon les revendications 1 ou 2,
**qui se caractérise en ce que**
au moins une bobine (7) est conçue de forme longitudinale ou ovale dans la direction de la ligne aérienne de contact (1).

4. Agencement selon l'une des revendications 1 à 3,
**qui se caractérise en ce que**
au moins une bobine (7) est disposée de manière oblique par rapport à la direction de la connexion (10).

5. Agencement selon la revendication 1,
**qui se caractérise en ce que**
au moins une bobine (7u) est disposée dans le sabot de contact (13) de telle sorte que, par rapport à la direction de la connexion (10) orientée vers le haut, elle vient se placer sous la ligne aérienne de contact (1) lorsqu'elle est en état connecté, la distance entre le sabot de contact (13) et le fil de la ligne aérienne de contact (1) pouvant être déterminée.

6. Agencement selon l'une des revendications 1 à 4,
**qui se caractérise par :**
- plusieurs circuits résonnants (15), chacun équipé d'au moins une bobine (7), les bobines (7) étant disposées les unes sur les autres dans la direction de la connexion (10) et les unes à côté des autres dans la direction de la ligne aérienne de contact (1),
- le dispositif de mesure (14) étant conçu et agencé pour déterminer, sur la base du calcul des différentes fréquences de résonance, l'épaisseur du fil de la ligne aérienne de contact (1) dans la direction de la connexion (10).

7. Agencement selon l'une des revendications 1 à 4,
**qui se caractérise par :**
- les cellules de sources de lumière et les cellules de capteurs de lumière (9) du dispositif de mesure (14) qui sont en liaison optique active avec la ligne aérienne de contact (1) lorsque la tête de captage du courant (3) est en état connecté,
- le dispositif de mesure (14) étant conçu et agencé pour déterminer l'épaisseur du fil de la ligne aérienne de contact (1) dans la direction de la connexion (10) sur la base des signaux de sortie émis par les cellules de capteurs de lumière (9).

8. Agencement selon la revendication 7,
**qui se caractérise en ce que**
les cellules de sources de lumière et les cellules de capteurs de lumière (9) sont disposées dans ou sur la tête de captage du courant (3).

9. Agencement selon la revendication 8,
**qui se caractérise en ce que**
les cellules de sources de lumière et les cellules de capteurs de lumière (9) sont disposées les unes sur les autres dans la direction de la connexion (10) et de manière décalée dans la direction de la ligne aérienne de contact (1).

10. Agencement selon l'une des revendications précédentes,
**qui se caractérise par :**
- un système de détection de position (16) qui est conçu et agencé pour déterminer la position de la tête de captage du courant (3),
- le dispositif de mesure (14) étant conçu et agencé pour enregistrer les épaisseurs déterminées du fil de la ligne aérienne de contact (1) avec les positions correspondantes de la tête de captage du courant (3) et, par conséquent, la position de la mesure.

11. Procédé pour déterminer l'épaisseur du fil d'une ligne aérienne de contact (1) à l'aide d'un agencement selon l'une des revendications 1 à 10,
**qui se caractérise par :**
- la détermination automatique de la fréquence de résonance du circuit résonnant (15) déréglée par le fil de la ligne aérienne de contact (1) et
- la détermination de l'épaisseur du fil de la ligne aérienne de contact (1) sur la base de la détermination de la fréquence de résonance.

12. Procédé selon la revendication 11,
**qui se caractérise en ce que**
la détermination de l'épaisseur est effectuée par le déplacement d'un véhicule relié à une ligne aérienne de contact (1) comprenant le circuit résonnant (15).

13. Procédé selon la revendication 11 ou 12,
**qui se caractérise par :**
- la détermination optique automatique de l'épaisseur du fil de la ligne aérienne de contact (1) dans la direction de la connexion (10), l'agencement étant conçu selon au moins l'une des revendications 7 à 9.
